# EUROPÄISCHE PATENTSCHRIFT

(11) **EP 0 435 384 B1**
(45) Veröffentlichungstag und Bekanntmachung des Hinweises auf die Patenterteilung: **03.07.1996**
(21) Anmeldenummer: 90203352.1
(22) Anmeldetag: 17.12.1990
(51) Int. Cl.: H04J 3/07

(54) **Schaltungsanordnung zur Bitratenanpassung**
Circuit for bit rate-adaption
Circuit d'adaptation de débit binaire

(30) Priorität: 23.12.1989 DE 3942883
(43) Veröffentlichungstag der Anmeldung: 03.07.1991
(73) Patentinhaber: Philips Patentverwaltung GmbH, 22335 Hamburg (DE); Philips Electronics N.V., 5621 BA Eindhoven (NL)
(72) Erfinder: Urbansky, Ralph, Dr., W-8501 Schwaig 2 (DE)
(74) Vertreter: Peuckert, Hermann, Dipl.-Ing.

(56) Entgegenhaltungen:
- EP-A- 0 209 483
- EP-A- 0 330 984
- DE-A- 3 315 372
- US-A- 4 574 254
- IEEE TRANSACTIONS ON COMMUNICATIONS. Bd. 26, Nr. 5, Mai 1978, NEW YORK USSeiten 601 - 610; J. H. STOTT: 'Design Technique for Multiplexing AsynchronousDigital Video and Audio Signals'
- ELECTRONICS AND COMMUNICATIONS IN JAPAN. Bd. 63, Nr. 9, September 1980, NEWYORK US Seiten 81 - 90; H. FUKUDA ET AL.: '256-Bit Elastic Store CMOS LSI'

## Beschreibung

Die Erfindung bezieht sich auf eine Schaltungsanordnung zur Bitratenanpassung zweier Signale mit einem elastischen Speicher, der zur Einschreibung eines ersten nach Rahmen strukturierten Signals mittels eines Schreibzählers und zur Auslesung eines zweiten Signals mittels eines Lesezählers vorgesehen ist, mit einem Phasenvergleicher zum Vergleichen der Zählerstände des Schreib- und Lesezählers, der ebenso wie der Lesezähler Bestandteil eines Regelkreises zur Regelung des Taktes für den Lesezähler und der zur Lieferung seines Ausgangssignals als Regelabweichung an einen Regler vorgesehen ist, und mit einem Stellglied, das eine steuerbare Oszilatorschaltung zur Lieferung des Taktes für den Lesezähler enthält.

Eine Schaltungsanordnung zur Bitratenpassung ist aus der DE-A1-3920391 zu entnehmen. Sie wird in der Nachrichtentechnik benötigt, um die im Rahmen eingeordneten Nutzdaten als plesiochrones Datensignal zurückzugewinnen. Es werden deshalb nur die Nutzdaten in den elastischen Speicher eingeschrieben, weil der Zähler bei allen anderen Daten des Signals angehalten wird und der Stand des Schreibzählers die Adressen angibt, unter denen Daten im elastischen Speicher abgelegt werden. Entsprechend gibt der Stand des Lesezählers die Adressen der Speicherstellen an, aus denen die Nutzdaten wieder ausgelesen werden.

Das Auslesen der Nutzdaten hat so zu erfolgen, daß die Abweichungen von der Sollbitrate des wiedergewonnenen plesiochronen Signals innerhalb der vorgeschriebenen Toleranzgrenzen bleiben. Eine Korrektur der Auslesegeschwindigkeit innerhalb dieser Toleranzgrenzen ist erforderlich, um zum Beispiel das Überlaufen des elastischen Speichers zu verhindern. Daher hat eine Überwachung der Stände der beiden Zähler zu erfolgen. Dieser Überwachung dient der Phasenvergleicher, durch den die Differenz der Zählerstände oder eine dazu äquivalente Größe gebildet wird. Wird das Ausgangssignal des Phasenvergleichers als Regelabweichung für eine übliche Phasenregelschleife verwendet, mit der der Takt für den Lesezähler erzeugt wird, so hat das bei großen sprunghaften Regelabweichungen den Nachteil, das der Lesetakt und damit das plesiochrone Signal mit starkem Jitter behaftet ist.

Solche Regelabweichungen kommen zum Beispiel vor, wenn die Nutzdaten in einem Synchronen Transport-Modul-1 übertragen werden. Der Schreibzähler muß dann für mehrere Bytes angehalten werden. Er läuft also sehr ungleichmäßig. Dieser ungleichmäßige Lauf spiegelt sich auch in der Regelabweichung mit den nachteiligen Folgen für das plesiochrone Signal wieder.

Aus der DE-A1-3315372 ist noch eine Schaltungsanordnung zur Umsetzung eines anisochronen binären Eingangssignals in ein isochrones binäres Ausgangssignal bekannt. Hierbei wird ein erstes Signal in einen elastischen Speicher eingeschrieben und ein zweites Signal aus diesem elastischen Speicher ausgelesen. Der Schreibvorgang wird mit Hilfe eines Schreibtaktsignales gesteuert. Das Schreibtaktsignal wird über einen ersten Teiler einem Vergleicher zugeführt, der noch das über einen zweiten Teiler geteilte Lesetaktsignal erhält. Das Lesetaktsignal dient zur Steuerung des Auslesevorgangs. Der Vergleicher sendet eine analoges Ausgangssignal an einen Spannungsgesteuerten Oszilator, der das Lesetaktsignal erzeugt. Zwischen dem Vergleicher und dem spannungsgesteuerten Oszilator kann noch ein integrierender Regler angeordnet sein. Bei dieser Anordnung gibt der Vergleicher ein analoges Ausgangssignal ab. Eine digitale Regelung ist nicht vorgesehen.

Der Erfindung liegt die Aufgabe zugrunde, eine Schaltungsanordnung mit dem eingangs genannten Merkmalen anzugeben, bei der der Jitter im Takt für den Lesezähler weitgehend vermieden wird.

Diese Aufgabe wird dadurch gelöst, daß im Regelkreis zwischen Regler und Stellglied eine Akkumulatorschaltung angeordnet ist und daß die Akkumulatorschaltung zur Wandlung des Ausgangssignals des Reglers in eine als Führungsgröße für das Stellglied dienende Impulsfolge vorgesehen ist.

Bei dieser Regelung des Taktes für den Lesezähler werden relativ große Frequenzabweichungen aufgefangen. Der Vergleicher gibt ein digitales Ausgangssignal einem digitalem Regler, der ein digitales Ausgangssignal erzeugt. Das Stellglied kann nur analoge Signale verarbeiten. Daher ist die Akkumulatorschaltung zur Bildung einer Impulsfolge vorgesehen. Die Impulsfolge ist zur Größe der akkumulierten Zahlen proportional.

In einer ersten Ausführungsform enthält die Akkumulatorschaltung einen Addierer und ein Register. Der Addierer, dessen Ausgang mit dem Eingang des Registers verbunden ist, dient zur Addition der Ausgangssignale des Reglers und des Registers. Der Addierer ist weiter zur Lieferung seines Übertrages als Impulsfolge an das Stellglied vorgesehen.

Eine weitere vorteilhafte Ausgestalltung besteht darin, das als steuerbare Oszilatorschaltung eine Phasenregelschleife verwendet wird, deren Führungsgröße zur Stellgröße des Regelkreises proportional ist. Diese Ausgestaltung macht den Regelkreis unempfindlicher gegen Störungen.

In einer weiteren vorteilhaften Ausgestaltung enthält der Regler mindestens ein nichtlineares Glied, mit dem große Regelabweichungen überproportional verstärkt werden. Ein solches nichtlineares Glied sorgt für eine beschleunigte Ausregelung großer Regelabweichungen.

Gibt man dem Regler PI-Verhalten (proportionales und integrierendes Verhalten), so werden stationäre Phasenabweichungen bei konstanter Frequenzabweichung vermieden.

Anhand der Figuren und eines Ausführungsbeispiels soll die Erfindung näher erläutert werden. Es zeigen:
Figur 1 eine schmatische Darstellung der Rahmenstruktur eines Synchronen Transport-Moduls 1 (SMT-1) und
Figur 2 eine Schaltungsanordnung zur Taktanpassung mit Schaltungsmerkmalen nach der Erfindung.

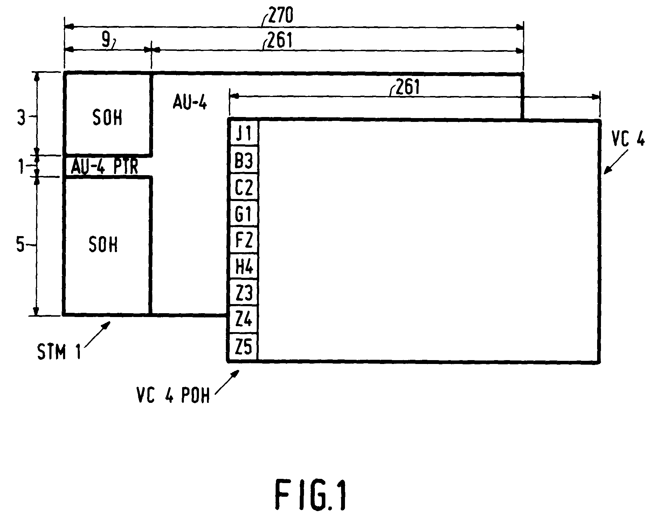

In der schmatischen Darstellung eines STM-l-Rahmens nach Figur 1 ist die gesamte binäre Information des Rahmens in Zeilen unterteilt. Der Rahmen besteht aus neun Zeilen, wie die Summe der links in Figur 1 stehenden Zahlen zu verstehen gibt. Jede Zeile enthält 270 Bytes, angedeutet durch die oberste Zahl in Figur 1. Der gesamte Rahmen gliedert sich in drei Bereichte (wegen Details vgl. zum Beispiel die CCITT-Empfehlungen G.707, G.708, G.709, Blaubuch Genf 1988).

Der erste Bereich besteht aus der eigentlichen Nutzinformation, verpackt in einem virtuellen Container VC4, der in Figur 1 ebenfalls zeilenweise dargestellt ist. Jede Zeile des virtuellen Containers VC4 besteht aus 261 Bytes; jede der Zeilen wird durch eine ein Byte lange Steuerinformation J1, B3, C2...Z5 angeführt. Die restlichen Bytes des Containers VC4 bestehen aus 18 festen Stopfbytes, einem Sonderbyte, das sechs Nutzbits, ein festes und ein variables Stopfbit enthält, und 241 Nutzbytes. Die Stopfinformationen für die variablen Bits sind in fünf der festen Stopfbytes enthalten.

Der zweite Bereich des Rahmens ist der Overhead-Bereich SOH, der die ersten neun Bytes bestimmter Rahmenzeilen ausfüllt. Dieser Bereich enthält Bytes, die unter anderem der Rahmensynchronisation, der Fehlerüberwachung und dem Netzmanagement dienen.

Der dritte Bereich ist der Pointer-Bereich PTR der administrativen Einheit AU-4. Hier befinden sich unter anderem Bytes, die die Lage des virtuellen Containers VC4 innerhalb eines Rahmens angeben. Diese Lage ist nicht festgelegt und auch nicht an die Rahmenstruktur gebunden, d.h., der Container kann in einem Rahmen beginnen und in einem zweiten enden. Außerdem sind in der Pointer-Zeile Platz für sechs Bytes vorgesehen, die der Taktanpassung dienen und in Ausnahmefällen entweder alle mit bedeutungslosen Füllbytes (positives Bytestopfen) oder alle mit zusätzlichen Nutzinformationsbytes (negatives Bytestopfen) besetzt werden. Die Regel ist der Fall, in dem drei mit Stopfbits und drei mit Informationsbits besetzte Bytes vorliegen. Die Stopfinformation für dieses variable Bytestopfen ist auch im Pointer-Bereich enthalten.

Die gesamte Rahmendauer beträgt 125 µs; das entspricht einer Übertragungsrate von 155,52 Mbit/s.

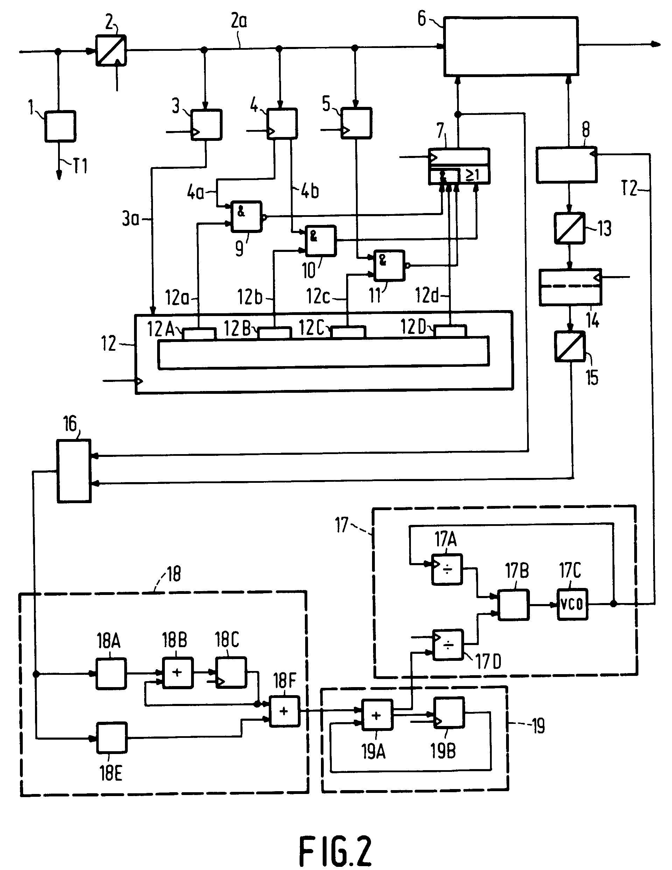

Hauptbestandteile der Schaltung nach Figur 2 sind ein Pufferspeicher 6, ein Schreibzähler 7, eine Lesezähler 8, ein Rahmenzähler 12 und ein weiter unten näher erläuterter Regelkreis 8, 16, 18, 19 und 17. Der Stand des Schreibzählers 7 und der Stand des Lesezählers 8 werden von einem Vergleicher 16 miteinander verglichen, dessen Ausgangssignal die Regelabweichung des erwähnten Regelkreises angibt. Dieser Regelkreis regelt den Lesetakt T2 für den Lesezähler 8, mit dem die Bits aus dem Pufferspeicher 6 ausgelesen werden. Die nominelle Taktfrequenz des Taktes T2 beträgt 139,264 MHz.

Eine Veränderung dieses Taktes ist an zwei Bedingungen geknüpft, nämlich an die, daß während des gesamten Betriebes der Schaltungsanordnung der Abstand zwischen Schreib- und Leseadressen möglichst einem vorgegebenen Abstand gleicht und an die, daß die Abweichung des Lesetaktes T2 von 139,264 MHz innerhalb vorgeschriebener Grenzen bleibt (±15 ppm). Wie erfindungsgemäß diese beiden Bedingungen gleichzeitig erfüllt werden, soll nun im einzelnen erläutert werden.

Ein nach STM-1-Rahmen strukturiertes Eingangssignal wird einer Taktrückgewinnung 1 und einer Empfangsschnittstelle 2 zugeführt. Die Empfangsschnittstelle 2 erzeugt aus dem CMI-codierten ein binär codiertes Eingangssignal und die Taktrückgewinnung erzeugt den für das Binärsignal notwendigen Bittakt T1. Alle taktgebundenen Bausteine der Schaltung nach Figur 2 werden mit diesem Bittakt T1 getaktet, sofern nicht ausdrücklich etwas anderes angegeben ist.

Ein Vergleicher 3 überträgt über eine Leitung 3a einen Impuls an den Setzeingang des Rahmenzählers 12, sobald das Rahmenkennungswort im Signal auf einer Leitung 2a aufgetreten ist.

Der Rahmenzähler 12 zählt sämtliche Bits eines Rahmens und gibt beim Durchlaufen vorbestimmter Zählerstände an seinen Ausgängen 12a bis 12d Impulse von der Länge eines Bits ab. Vergleichsschaltungen, mit denen derartige Impulse erzeugt werden, sind mit den Bezugszeichen 12A bis 12D versehen. Ihr innerer Aufbau liegt für den Fachmann auf der Hand, sobald er Funktionsangaben erhält. Dies gilt auch für alle anderen Bausteine, die lediglich durch ihre Wirkungsweise charakterisiert werden.

Eine Erkennungsschaltung 4 wertet die im Pointer-Bereich enthaltene Stopfinformation für Bytes aus. Diese Information gibt an, daß an einer später folgenden und festgelegten Stelle des Rahmens ein Byte auf der Senderseite positiv oder negativ gestopft worden ist. Ist entgegen der Regel positiv gestopft worden, wird auf der Leitung 4a für die Dauer eines Rahmens eine logische Eins abgegeben, die ein NAND-Gatter 9 derart beeinflußt, daß sein Ausgang auf logisch Null geht, wenn die Vergleichsschaltung 12A feststellt, daß der Rahmenzähler gerade die Bits zählt, die zu dem gestopften Byte gehören.

Mit dem Ausgangssignal des NAND-Gatters 9 wird der Schreibzähler 7 angehalten, so daß die gestopften Bytes nicht in den Pufferspeicher 6 mit eingeschrieben werden. Ist entgegen der Regel negativ gestopft worden, enthalten also die dafür vorgesehenen Bytes Nutzinformationen, so muß der Schreibzähler 7 weiterlaufen, damit auch diese Bits in den Pufferspeicher 6 eingeschrieben werden. In diesem Falle gibt die Erkennungsschaltung 4 auf einem Ausgang 4b eine logische Eins ab, die zusammen mit einem UND-Gatter 10, der Vergleichsschaltung 12B und der im Schreibzähler enthaltenen Logik dafür sorgt, daß er bedingungslos weiterläuft. Die Logik im Schreibzähler 7 besteht aus einem UND-Gatter mit drei Eingängen, einem ODER-Gatter mit zwei Eingängen, dessen einer Eingang mit dem Ausgang des UND-Gatters 10 verbunden ist, während der andere Eingang mit dem Ausgang des im Schreibzähler 7 enthaltenen UND-Gatters verbunden ist.

Da in einem STM-1-Rahmen auch einzelne Stopfbitstellen vorgesehen sind, die mit Nutzinformationen oder einem Füllbit besetzt sein können, ist eine zweite Erkennungsschaltung 5 vorgesehen, die die Stopfinformation für diese einzelnen Bits auswertet. Ist gestopft worden, gibt die Erkennungsschaltung 5 eine Zeile lang eine logische Dauereins an einen Eingang eines NAND-Gatters 11 ab, dessen anderer Eingang über eine Leitung 12c mit dem Ausgang einer Vergleichsschaltung 12C verbunden ist. Die Vergleichsschaltung 12C gibt einen Impuls ab, wenn der Rahmenzähler die Stelle des Stopfbits erreicht hat. Dieser Impuls setzt den Ausgang des NAND-Gatters 11 auf logisch Null und hält damit - wegen der Verbindung mit dem UND-Gatter des Schreibzählers 7 - den Schreibzähler 7 für einen Takt lang an. Ist nicht gestopft worden, läuft der Schreibzähler 7 an der Stopfbitstelle weiter.

Alle Bits oder Bytes, die zum Overhead-Bereich oder Pointer-Bereich gehören und niemals Nutzinformationen enthalten, werden ebenfalls nicht in den Pufferspeicher 6 eingelesen. Über eine Vergleichsschaltung 12D und eine Leitung 12d, die zu einem Eingang des im Schreibzähler 7 enthaltenen UND-Gatters führt, wird der Schreibzähler 7 an den entsprechenden Stellen angehalten. An Stellen, die in der Regel keine Nutzinformation enthalten, wird der Schreibzähler 7 durch die Vergleichsschaltung 12d ebenfalls angehalten, wenn nicht das Weiterlaufen Vorrang hat (vergleiche weiter oben).

Die vom Lesezähler 8 im Dualcode erzeugten Adressen werden zunächst durch einen Codierer 13 in den Gray-Code gewandelt, in ein Register 14 mit dem Takt T1 übernommen und anschließend durch einen Decodierer 15 in den Dual-Code zurücktransformiert.

Sinn der Verwendung des Gray-Codes ist der, daß auf diese Weise bei der Synchronisierung der Leseadressen auf den Takt T1 die geringsten Fehler gemacht werden. Die Synchronisation wiederum ist für die ordnungsgemäße Subtraktion durch den Phasenvergleicher 16 erforderlich; er bildet die Differenz der Stände der Zähler 7 und 8, verschoben um den Sollabstand zwischen Schreib- und Lese-Adressen. Ist sein Ausgangssignal Null, haben Schreib- und Leseadressen ihren Sollabstand.

Ein Regler 18 ist so ausgelegt, daß er die dual codierten Regelabweichungen des Phasenvergleichers 16 unmittelbar verarbeiten kann. Er enthält zwei Zweige, einen ersten mit einem nichtlinearen Glied 18A und einem Akkumulator 18B, 18G sowie einen weiteren Zweig mit einem nichtlinearen Glied 18E. Durch den ersten Zweig wird das I-Verhalten und durch den zweiten Zweig das P-Verhalten des Reglers festgelegt. Die Signale beider Zweige werden durch einen Addierer 18F addiert.

Die beiden nichtlinearen Glieder 18A und 18E verstärken die Regelabweichung für große Werte überproportional, was zur Folge hat, daß große Regelabweichungen schneller ausgeregelt werden. Es hat sich als günstig erwiesen, die Überproportionalität für den I-Zweig wesentlich größer zu wählen als für den P-Zweig.

Im Ausführungsbeispiel besteht das Stellglied 17 des Regelkreises aus einer Phasenregelschleife 17A, 17B, 17C und 17D. Die Einheit 17B ist der Phasenvergleicher der Phasenregelschleife und der Baustein 17C enthält unter anderem den spannungsgesteuerten Oszillator der Phasenregelschleife und gegebenenfalls Filter. Die Teiler 17A und 17B teilen die Regelgröße und die Führungsgröße des Phasenregelkreises im Verhältnis 1:16 herunter.

Da für den Phasenregelkreis als Führungsgröße nur Impulsfolgen in Frage kommen, wird das Ausgangssignal des Addierers 18F durch eine Akkumulatorschaltung 19 (Sigma-Delta-Modulator) in eine Impulsfolge gewandelt. In einem Addierer 19A werden die Ausgangsdaten des Addierers 18F und die eines Registers 19B addiert und - bis auf einen Übertrag - erneut in das Register eingeschrieben. Die Folge der Übertragsimpulse ist zur Größe der akkumulierten Zahlen proportional.

## Patentansprüche

1. Schaltungsanordnung zur Bitratenanpassung zweier Signale mit einem elastischen Speicher (6), der zur Einschreibung eines ersten nach Rahmen strukturierten Signals mittels eines Schreibzählers (7) und zur Auslesung eines zweiten Signals mittels eines Lesezählers (8) vorgesehen ist, mit einem Phasenvergleicher (16) zum Vergleichen der Zählerstände des Schreib- und Lesezählers (7,8), der ebenso wie der Lesezähler (8) Bestandteil eines Regelkreises zur Regelung des Taktes für den Lesezähler (8) und der zur Lieferung seines Ausgangssignals als Regelabweichung an einen Regler (18) vorgesehen ist, und mit einem Stellglied (17), das eine steuerbare Oszillatorschaltung zur Lieferung des Taktes für den Lesezähler (8) enthält,
dadurch gekennzeichnet,
daß im Regelkreis zwischen Regler (18) und Stellglied (17) eine Akkumulatorschaltung (19) angeordnet ist und daß die Akkumulatorschaltung (19) zur Wandlung des Ausgangssignals des Reglers (18) in eine als Führungsgröße für das Stellglied (17) dienende Impulsfolge vorgesehen ist.

2. Schaltungsanordnung nach Anspruch 2,
dadurch gekennzeichnet,
daß die Akkumulatorschaltung (19) einen Addierer (19A) und ein Register (19B) enthält, daß der Addierer (19A), dessen Ausgang mit dem Eingang des Registers (19B) verbunden ist, zur Addition der Ausgangssignale des Reglers (18) und des Registers (19B) dient und daß der Addierer (19A) zur Lieferung seines Übertrages als Impulsfolge an das Stellglied (17) vorgesehen ist.

3. Schaltungsanordnung nach Anspruch 1 oder 2,
dadurch gekennzeichnet,
daß als steuerbare Oszillatorschaltung (17) eine Phasenregelschleife (17A bis 17D) verwendet wird, deren Führungsgröße zur Stellgröße des Regelkreises proportional ist.

4. Schaltungsanordnung nach einem der vorhergehenden Ansprüche,
dadurch gekennzeichnet,
daß der Regler (18) mindestens ein nichtlineares Glied (18A, 18 B) enthält, mit dem große Regelabweichungen überproportional verstärkt werden.

5. Schaltungsanordnung nach einem der vorhergehenden Ansprüche,
dadurch gekennzeichnet,
daß der Regler (18) PI-Verhalten hat.

## Revendications

1. Montage de circuit d'adaptation du débit binaire de deux signaux, comportant une mémoire élastique (6), qui est destinée à inscrire un premier signal structuré selon une trame à l'aide d'un compteur d'écriture (7) et à extraire un deuxième signal à l'aide d'un compteur de lecture (8), un comparateur de phase (16) pour comparer les comptages du compteur d'écriture (7) et du compteur de lecture (8), qui fait partie, tout comme le compteur de lecture (8), d'un circuit de régulation pour régler la cadence du compteur de lecture (8) et qui est destiné à délivrer un signal de sortie en tant qu'écart de régulation à un régulateur (18), et un élément de réglage (17) qui contient un circuit oscillant commandé pour délivrer la cadence pour le compteur de lecture (8),
caractérisé en ce que dans le circuit de régulation, entre le régulateur (18) et l'élément de réglage (17) est disposé, un circuit accumulateur (19) et que le circuit accumulateur (19) est prévu pour convertir le signal de sortie du régulateur (18) en une suite d'impulsions servant de grandeur de référence pour l'élément de réglage (17).

2. Montage de circuit selon la revendication 1,
caractérisé en ce que le circuit accumulateur (19) contient un additionneur (19A) et un registre (19B), que l'additionneur (19A), dont la sortie est connectée à l'entrée du registre (19B), sert à l'addition des signaux de sortie du régulateur (18) et du registre (19B), et que l'additionneur (19A) est utilisé pour délivrer son report sous la forme d'une suite d'impulsions à l'élément de réglage (17).

3. Montage de circuit selon la revendication 1 ou 2, caractérisé en ce qu'on utilise comme circuit oscillateur commandé (17) une boucle à phase asservie (17A à 17D) dont la grandeur de référence est proportionnelle à la grandeur de réglage du circuit de régulation.

4. Montage de circuit selon l'une quelconque des revendications précédentes, caractérisé en ce que le régulateur (18) contient au moins un élément non linéaire (18A, 18B) qui permet d'amplifier les gros écarts de régulation de manière surproportionnelle.

5. Montage de circuit selon l'une quelconque des revendications précédentes, caractérisé en ce que le régulateur (18) a une action PI.

## Claims

1. Circuit arrangement for adapting the bit rates of two signals to each other, which circuit arrangement comprises an elastic store (6) which is provided for writing a first frame-structured signal *via* a write address counter (7) and for reading a second signal via a read address counter (8), which circuit arrangement comprises a phase comparator (16) for comparing the counts of the write and read address counters (7, 8), which phase comparator just like the read address counter (8) forms part of a phase locked loop for controlling the timing for the read address counter (8) and which comparator is provided for supplying an output signal as a control error to a control circuit (18), and which circuit arrangement comprises a regulating unit (17) which includes a controllable oscillator circuit to produce the clock signals for the read address counter (8), characterized in that an accumulator circuit (19) is connected in the phase control loop between control circuit (18) and regulating unit (17) and in that the accumulator circuit (19) is provided for transforming the output signal of the control circuit (18) into a pulse sequence used as a reference signal for the regulating unit (17).

2. Circuit arrangement as claimed in Claim 1, characterized in that the accumulator circuit (19) comprises an adder (19A) and a register (19B), in that the adder (19A), whose output is connected to the input of the register (19B), is used for adding together the output signals of the control circuit (18) and of the register (19B) and in that the adder (19A) is furthermore used for supplying its carry output as a pulse sequence to the regulating unit (17).

3. Circuit arrangement as claimed in Claim 1 or 2, characterized in that a phase-locked loop (17A to 17D) whose reference value is proportional to the setting signal of the control loop is used as a controllable oscillator circuit (17).

4. Circuit arrangement as claimed in one of the preceding Claims, characterized in that the control circuit (18) comprises at least one non-linear element (18A, 18B) by which large control errors are amplified disproportionately.

5. Circuit arrangement as claimed in one of the preceding Claims, characterized in that the control circuit (18) has a PI-behaviour.
